# EUROPÄISCHE PATENTSCHRIFT

(11) **EP 2 422 266 B1**
(45) Veröffentlichungstag und Bekanntmachung des Hinweises auf die Patenterteilung: **20.03.2013**
(21) Anmeldenummer: 11705151.6
(22) Anmeldetag: 28.01.2011
(51) Int. Cl.: G06F 3/033, G06F 3/01

(54) **VERFAHREN ZUR AUFNAHME UND ÜBERTRAGUNG VON BEWEGUNGSINFORMATION**
METHOD FOR RECORDING AND TRANSMISSION OF MOTION BASED INFORMTION
PROCEDE D' ENREGISTREMENT ET ÉMISSION D' INFORMATION SUR MOUVEMENT

(30) Priorität: 17.02.2010 DE 102010008301
(43) Veröffentlichungstag der Anmeldung: 29.02.2012
(73) Patentinhaber: Siemens Enterprise Communications GmbH & Co. KG, 81379 München (DE)
(72) Erfinder: BOZIONEK, Bruno, 33178 Borchen (DE); KLAGHOFER, Karl, 81373 Muenchen (DE); PRANGE, Holger, 81373 Muenchen (DE); TIETSCH, Michael, 86916 Kaufering (DE)
(74) Vertreter: Fritzsche, Thomas
(86) Internationale Anmeldenummer: PCT/EP2011/000408
(87) Internationale Veröffentlichungsnummer: WO 2011/101085

(56) Entgegenhaltungen:
- WO-A2-2009/118183
- DE-A1- 10 019 165
- DE-A1- 10 155 044
- DE-U1-202008 011 939

## Beschreibung

Die Aufnahme und Auswertung von Bewegungsinformation durch informationstechnische Vorrichtungen gewinnt zunehmend an Bedeutung. Beispielsweise zur Entwicklung von Benutzeroberflächen wird zunehmend Bewegungsinformation von Benutzern herangezogen, um eine Tastatureingabe durch Körperbewegungen, die von einem Sensor aufgenommen werden, zu ersetzen.

Die DE 100 19165 A1 beschreibt eine Eingabe- und Aufnahmevorrichtung in Form eines digitalen Schreibstiftes zur mobilen Dateneingabe bzw. -aufnahme und -verarbeitung, insbesondere zur Texteingabe und -verarbeitung. Der Stift besitzt eine Recheneinheit, einen Bewegungssensor und einen Abstandsmesssensor an der Stiftspitze, wodurch die Bewegungsgeschwindigkeit, Bewegungsrichtung und Position der Stiftspitze ermittelt wird und kontinuierlich Daten über den Abstand der Stiftspitze relativ zur Schreiboberfläche erfasst werden.

Die WO 2009/118183 A2 beschreibt ein Verfahren zur Abwicklung einer elektronischen Signalverarbeitung von Eingangssignalen, die als solche nach Maßgabe von Hand-Gesten generiert werden. Dabei werden die Hand-Gesten eines Anwenders gegenüber einem Detektionssystem vollführt. Die Eingangssignale werden derart generiert oder transformiert, dass diese Transfersignale darstellen, die mit der räumlichen Bewegung einer Hand oder deren Finger korrelieren. Die Transfersignale werden hierbei derart generiert, dass das Frequenzband der Transfersignale das Frequenzband der einem Spracherkennungssystem zugänglichen Klangsignale erfasst. Die Interpretation der Hand-Gesten über das Spracherkennungssystem erfolgt auf Grundlage jener Transfersignale unter Anwendung von Sprachanalyseprozeduren.

Der vorliegenden Erfindung liegt die Aufgabe zugrunde, ein Verfahren zur Aufnahme und Übertragung von Bewegungsinformation von einem Sender an einen Empfänger anzugeben. Diese Aufgabe wird durch den unabhängigen Patentanspruch gelöst.

Die vorliegende Erfindung sieht ein Verfahren vor, bei dem Bewegungsinformation aufgenommen wird, indem ein Aufnahmegerät auf der Seite des Senders die Bewegung eines Objekts mit Hilfe mindestens eines Sensors registriert und in ein digitales Signal umwandelt, das dem Sender zugeführt wird. Der Sender bettet die Daten des ihm vom Aufnahmegerät zugeführten, digitalen Signals in eine Folge von Daten ein und übermittelt diese Folge von Daten an einen Empfänger. Die vom Sender übermittelte Folge von Daten enthält neben den Daten des digitalen Signals oder anstelle dieser Daten Kontext-Daten, die vom Empfänger dazu verwendet werden, die ursprünglich aufgenommene Bewegungsinformation innerhalb eines gegebenen Kontexts zu verarbeiten.

Erfindungsgemäß ist vorgesehen, dass die vom Sender übermittelte Folge von Daten neben den Daten des digitalen Signals oder an Stelle dieser Daten Kontext-Daten enthält, die vom Empfänger dazu verwendet werden, die ursprünglich aufgenommene Bewegungsinformation innerhalb eines gegebenen Kontexts zu verarbeiten. Dieser Maßnahme der vorliegenden Erfindung liegt die Vorstellung zugrunde, dass den Bewegungen eines Objekts innerhalb eines gegebenen Kontexts bestimmte Bedeutungen zukommen können, die je nach gegebenem Kontext unterschiedlich sein können. So wird in vielen Fällen das Kopfnicken einer Person die Bedeutung einer Zustimmung tragen. Kopfschütteln bedeutet hingegen in vielen Fällen Ablehnung oder mangelnde Zustimmung.

Es sind aber auch Zusammenhänge denkbar, in denen eine seitliche Kopfbewegung die Aufmerksamkeit des Beobachters auf die betreffende Seite lenken soll oder in denen ein Kopfnicken die Bedeutung von "vertikal" oder "in vertikaler Richtung" tragen soll. Ähnlich verhält es sich mit den Bewegungen anderer Körperteile einer Person oder des gesamten Körpers einer Person. Ein menschlicher Betrachter wird in aller Regel die Bedeutung solcher Bewegungen zutreffend innerhalb eines gegebenen Zusammenhangs einschätzen können.

Soll die Bewegungsinformation hingegen von einem Automaten ausgewertet und weiterbehandelt werden, wird es in aller Regel hilfreich sein, wenn dem auswertenden Automaten auf Seiten des Empfängers durch den Sender oder ein mit ihm verbundenes Gerät Hinweise gegeben werden, in welcher Weise die Bewegungen zu interpretieren sind. Diese Hinweise werden im Allgemeinen die Form von Texten haben, wie beispielsweise Stichworten oder textartigen Erläuterungen des Bewegungsgeschehens.

Um am Beispiel der Kopfbewegung zu bleiben, sind daher je nach Zusammenhang beispielsweise folgende mögliche Kontext-Daten denkbar: "Ja/Nein/nach oben bewegen/nach unten bewegen/nach rechts bewegen/nach links bewegen". Diese Kontext-Daten können durch die Angabe von Raumkoordinaten und Zeitangaben weiter konkretisiert werden. Es ist aber auch denkbar, dass die Kontext-Daten anstelle von solchen Raumkoordinaten oder Zeitangaben übertragen werden, weil die Bedeutung der Bewegungsinformation sich bereits aus deren Kontext-Daten vollständig erschließt.

Im Rahmen der Beschreibung der vorliegenden Erfindung soll unter einer Bewegungsinformation jede Art von Information verstanden werden, die Rückschlüsse auf die Bewegung eines Objekts, beispielsweise eines menschlichen Benutzers einer informationstechnischen Einrichtung, zulässt. Insbesondere sollen darunter solche Informationen verstanden werden, die von einem Aufnahmegerät mit Hilfe eines Sensors gewonnen werden. Typische Beispiele für solche Informationen sind Videosequenzen oder aus solchen Videosequenzen abgeleitete oder extrahierte Merkmale, wie beispielsweise Bewegungsvektoren oder ähnliche Informationen. Der Begriff soll weiterhin jede Art von Information umfassen, die aus solchen Informationen abgeleitet werden kann, wie beispielsweise Ortskoordinaten, Geschwindigkeiten, Beschleunigungen von bewegten Objekten mit oder ohne zugehörige Zeitangaben oder ähnliche Informationen.

Unter einem Aufnahmegerät soll im Zusammenhang mit der Beschreibung der vorliegenden Erfindung jede Art von Gerät oder Vorrichtung verstanden werden, die geeignet ist, Bewegungsinformation von Objekten aufzunehmen und in ein digitales Signal umzuwandeln. Ein derartiges Aufnahmegerät bedient sich dazu eines Sensors oder beinhaltet einen solchen Sensor oder mehrerer solche Sensoren. Beispiele für solche Sensoren sind Videokameras, Beschleunigungssensoren, Magnetdetektoren, oder ähnliche Einrichtungen.

Da es sich bei den Bewegungsinformationen um Daten natürlichen Ursprungs handelt, liegen die vom Sensor erfassten Daten in aller Regel in analoger Form vor. Sie müssen für eine digitale Weiterverarbeitung in ein digitales Format umgewandelt werden. Die Begriffe "digitales Signal" und "digitale Daten", die dem Fachmann geläufig sind, werden in Übereinstimmung mit dem üblichen Sprachgebrauch im Rahmen dieser Erfindung weitgehend synonym verwendet. Entsprechend ist unter einem zeitlich veränderlichen digitalen Signal eine zeitliche Folge von Daten zu verstehen.

Daten oder Folgen von Daten können in andere Folgen von Daten in dem Sinne eingebettet werden, dass durch Hinzufügung einer ersten Folge von Daten oder mehrerer ersten Folgen von Daten in eine zweite Folge von Daten eine weitere, dritte Folge von Daten gebildet wird, welche ihrerseits die ersten Folgen von Daten und die zweite Folge von Daten als Teilfolgen enthält. Dabei kann die zeitliche Reihenfolge der Daten verändert werden. Ein typisches, dem Fachmann geläufiges Beispiel für eine solche Einbettung ist die Einfügung eines ersten Datensatzes in einen zweiten Datensatz, der beispielsweise aus einer Adressinformation, oder aus einer Routinginformation besteht, und in dem Nutzdaten, die mit Hilfe dieser Adressinformation und mit Hilfe dieser Routinginformation übertragen werden sollen, eingebettet werden. Häufig werden solche Datensätze oder Datenfolgen auch als Datenpakete bezeichnet.

Alle im Zusammenhang mit der Beschreibung der vorliegenden Erfindung verwendeten Begriffe sollen insbesondere solche Gegenstände umfassen, die der Fachmann nach seinem Fachwissen oder mit Hilfe seines Alltagswissens mit diesen begriffen verbindet.

Vorteilhafte Weiterbildungen der Erfindung sind Gegenstand von untergeordneten Patentansprüchen.

Im Folgenden wird die Erfindung anhand bevorzugter Ausführungsbeispiele und mit Hilfe von Figuren näher beschrieben.

Dabei zeigt:
- Fig. 1: ein erstes bevorzugtes Ausführungsbeispiel der vorliegenden Erfindung;
- Fig. 2: ein weiteres bevorzugtes Ausführungsbeispiel der vorliegenden Erfindung.

Die Erfindung beruht auf dem Gedanken, zur Aufnahme und Übertragung von Bewegungsinformation von einem Sender an einen Empfänger, diese Bewegungsinformation s1 zunächst aufzunehmen, indem ein Aufnahmegerät 102, 202 auf der Seite des Senders 103, 203 die Bewegung eines Objekts 106, 206 mit Hilfe mindestens eines Sendersensors 101, 201 registriert und in ein digitales Signal i3 umwandelt, das dem Sender 103, 203 zugeführt wird. Der Sender bettet die Daten des ihm vom Aufnahmegerät zugeführten digitalen Signals i2 in eine Folge i3 von Daten ein und übermittelt diese Folge von Daten an einen Empfänger 104, 204. Die vom Sender übermittelte Folge von Daten enthält neben den Daten des digitalen Signals oder an Stelle dieser Daten Kontext-Daten, die vom Empfänger dazu verwendet werden, die ursprünglich aufgenommene Bewegungsinformation innerhalb eines gegebenen Kontexts zu verarbeiten.

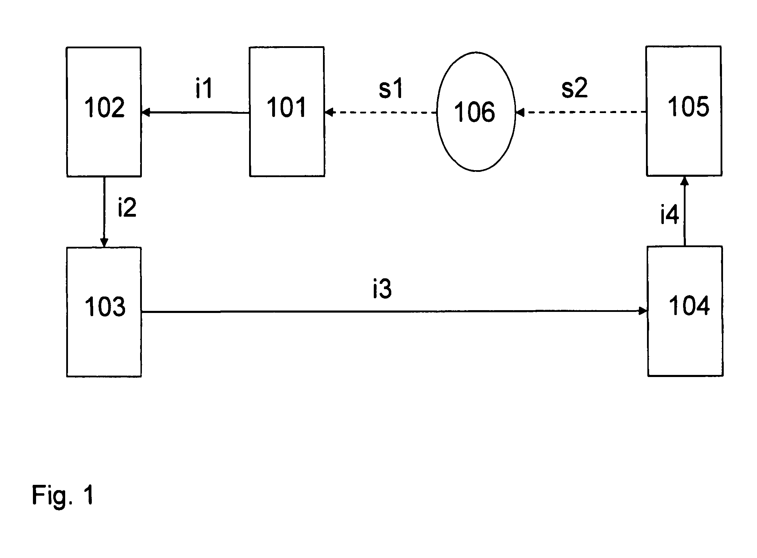

Wie in Fig. 1 schematisch dargestellt, erfasst der Sensor 101 die Bewegungen eines Objekts, beispielsweise eines Menschen, indem er die Bewegungsinformation s1 zunächst in ein analoges Sensorsignal i1 umwandelt. Diese analogen Sensordaten werden anschließend von einem Aufnahmegerät 102 in digitale Daten i2 umgewandelt und einem Sender 103 zugeführt. Der Sender bettet diese digitalen Daten in eine Folge von Daten i3 ein, und überträgt diese Folge von Daten an den Empfänger 104. Der Empfänger 104 kann die empfangenen Daten, welche die Bewegungsinformation des Objekts 106 enthalten, dazu verwenden, diese Informationen zu verarbeiten und beispielsweise zur Ausgabe von Benutzerinformationen s2 zu verwenden. Dazu kann der Empfänger eine Information i4 an ein Ausgabegerät 105 übertragen, welches anschließend die Benutzerinformation s2 ausgibt.

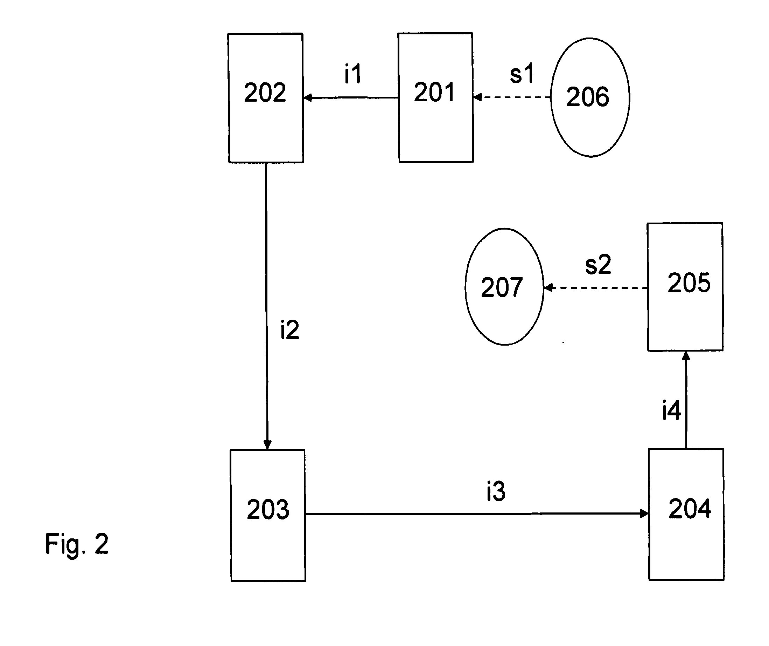

Wie in Fig. 2 schematisch dargestellt, müssen der Benutzer 206, dessen Bewegungsinformation s1 aufgenommen wird, und ein Benutzer 207, an den die Benutzerinformation s2 durch das Ausgabegerät 205 ausgegeben wird, nicht identisch sein. Das Ausführungsbeispiel der Fig. 1 eignet sich beispielsweise, um die Interaktion eines Benutzers 106 mit einem Informationssystem über Körperbewegungen zu steuern. Das in Fig. 2 dargestellte Ausführungsbeispiel der Erfindung eignet sich hauptsächlich dazu, Bewegungsinformation s1 dazu zu verwenden, eine Nachricht von einem Benutzer 206 an einen möglicherweise räumlich entfernten zweiten Benutzer 207 zu übermitteln. Der Benutzer muss nicht unbedingt eine Person sein. Vielmehr könnte es auch ein System sein, welches diese Bewegungsinformation interpretieren kann. Zum Beispiel "Kopf nicken", "Kopf schütteln" könnten dazu benutzt werden, um sich durch ein Sprachmenü zu bewegen.

Erfindungsgemäß ist vorgesehen, dass die vom Sender 103, 203 übermittelte Folge von Daten i3 neben den Daten des digitalen Signals i2 oder an Stelle dieser Daten Kontext-Daten enthält, die vom Empfänger 104, 204 dazu verwendet werden, die ursprünglich aufgenommene Bewegungsinformation i1 innerhalb eines gegebenen Kontexts zu verarbeiten. Dieser Maßnahme der vorliegenden Erfindung liegt die Vorstellung zugrunde, dass den Bewegungen eines Objekts 106 innerhalb eines gegebenen Kontexts bestimmte Bedeutungen zukommen können, die je nach gegebenem Kontext unterschiedlich sein können. So wird in vielen Fällen das Kopfnicken einer Person die Bedeutung einer Zustimmung getragen. Kopfschütteln bedeutet hingegen in vielen Fällen Ablehnung oder mangelnde Zustimmung.

Es sind aber auch Zusammenhänge denkbar, in denen eine seitliche Kopfbewegung die Aufmerksamkeit des Beobachters auf die betreffende Seite lenken soll oder in denen ein Kopfnicken die Bedeutung von vertikal oder in vertikaler Richtung tragen soll. Ähnlich verhält es sich mit den Bewegungen anderer Körperteile einer Person oder des gesamten Körpers einer Person. Ein menschlicher Betrachter wird in aller Regel die Bedeutung solcher Bewegungen zutreffend innerhalb eines gegebenen Zusammenhangs einschätzen können.

Soll die Bewegungsinformation hingegen von einem Automaten ausgewertet und weiterbehandelt werden, wird es in aller Regel hilfreich sein, wenn dem auswertenden Automaten auf Seiten des Empfängers durch den Sender oder ein mit ihm verbundenes Gerät Hinweise gegeben werden, in welcher Weise die Bewegungen zu interpretieren sind. Diese Hinweise werden im Allgemeinen die Form von Texten haben, wie beispielsweise Stichworten oder textartigen Erläuterungen des Bewegungsgeschehens.

Um am Beispiel der Kopfbewegung zu bleiben, sind daher je nach Zusammenhang beispielsweise folgende mögliche Kontext-Daten denkbar: "Ja/Nein/nach oben bewegen/nach unten bewegen/nach rechts bewegen/nach links bewegen". Diese Kontext-Daten können durch die Angabe von Raumkoordinaten und Zeitangaben weiter konkretisiert werden. Es ist aber auch denkbar, dass die Kontext-Daten anstelle von solchen Raumkoordinaten oder Zeitangaben übertragen werden, weil die Bedeutung der Bewegungsinformation sich bereits aus deren Kontext-Daten vollständig erschließt.

Bei einer bevorzugten Ausführungsform der Erfindung, versetzen die übertragenen Bewegungsinformationen den Empfänger in die Lage, diesen Bewegungsinformationen entsprechende Benutzerinformationen s2 auszugeben. So kann beispielsweise, wenn der Sensor eine seitliche Kopfbewegung registriert, am Empfänger eine Benutzerinformation in Form eines Texts "nach rechts bewegen" ausgegeben werden. Je nach Anwendungszusammenhang kann es vorteilhaft sein, die Benutzerinformationen auf optische und/oder akustische Weise auszugeben. Dies ist besonders einfach möglich, wenn die Kontext-Informationen bereits die auszugebene Nachricht beinhalten, so dass auf der Empfängerseite die entsprechende Textnachricht lediglich optisch ausgegeben oder mit Hilfe eines Sprachsynthesizers akustisch ausgegeben werden muss.

Die vorliegende Erfindung eignet sich auch vorteilhaft dazu, die Bewegungsinformationen über ein Netzwerk auf der Grundlage der Paketvermittlung zu übertragen. Da die Erfindung ohnehin vorsieht, die aufgenommene Bewegungsinformation in Form von Folgen von Daten zu übertragen, ist es leicht möglich, diese Datenfolgen in die Pakete bestimmter Netzwerkprotokolle einzubetten und so zu übertragen. Wichtige Beispiele für derartige Netzwerkprotokolle sind das Internetprotokoll und damit zusammenhängende Protokolle, wie beispielsweise das Session-Initiation-Protocol (SIP), das Session Description Protocol (SDP), oder das damit zusammenhängende Real Time Transport Protocol (RTP). Dies soll im Folgenden kurz am Beispiel einer sog. SIP-Info-Message erläutert werden.

Das Session Initiation Protocol (SIP) ist ein Netzprotokoll zum Aufbau, zur Steuerung und zum Abbau einer Kommunikationssitzung zwischen zwei und mehr Teilnehmern. Das Protokoll wird u. a. im RFC 3261 (http://tools.ietf.org/html/rfc3261) spezifiziert. In der IP-Telefonie ist das SIP ein häufig angewandtes Protokoll. Eine Möglichkeit ist es, im SIP Protokoll die Übertragung der eigentlichen Bewegungsinformation vorzunehmen, oder es wird ein "Bewegungsübertragungsprotokoll" im SDP ausgehandelt.

Das Session Description Protocol (SDP) wird beschrieben im RFC4566. Dieses Protokoll wird innerhalb des SIP Protokolls verwendet, um die Parameter einer RTP Kommunikation auszuhandeln. Hier werden die Capabilities der beteiligten Kommunikationsendgeräte mitgeteilt (supported Codecs, Codec Parameter, IP-Adressen und Ports). Ein bevorzugtes Ausführungsbeispiel der vorliegenden Erfindung sieht vor, Bewegungs-Parameter, beispielsweise Formate zwischen den Endgeräten für die spätere Übertragung der Bewegungsinformation auszuhandeln.

Das Real Time Transport Protocol (RTP) ist ein Protokoll zur kontinuierlichen Übertragung von audiovisuellen Daten (Streams) über IP-basierte Netzwerke. Das Protokoll wurde erstmals 1996 im RFC 1889 standardisiert. 2003 wurde ein überarbeiteter RFC veröffentlicht. Der RFC 3550 löst damit den RFC 1889 ab. Es dient dazu, Multimedia-Datenströme (Audio, Video, Text, etc.) über Netzwerke zu transportieren, d.h. die Daten zu kodieren, zu paketieren und zu versenden. RTP ist ein Paket-basiertes Protokoll und wird normalerweise über UDP betrieben. RTP kann sowohl für Unicast-Verbindungen als auch für Multicast-Kommunikation im Internet eingesetzt werden. RTP findet Anwendung in vielen Bereichen, u.a. wird es bei den IP-Telefonie-Technologien H.323 und SIP dazu verwendet, die Audio-/Videoströme des Gespräches zu übertragen. Die Funktion von RTP besteht hauptsächlich in der Übertragung echtzeitsensitiver Datenströme, während Protokolle wie das Session Description Protocol (SDP) oder das Real-Time Streaming Protocol (RTSP) der Steuerung und Kontrolle der Datenübertragung dienen.

In der sog. Backus-Naur-Form (BNF-Notation) kann dieses Protokoll für die Übertragung der Bewegungsinformation beispielsweise wie folgt erweitert werden:
motion = ("Motion") HCOLON motion-spec
motion-spec = (coord-spec / time-spec / context-spec) * (SEMI motion-spec)
coord-spec = ("x=" / "y=" / "z=") * (DIGIT)
time-spec = "time=" * (DIGIT)
context-spec = "context=" ("yes" / "no" / "move_up" /" move_down" /" move_right" / "move_left").

Aus dem hier angegebenen Beispiel einer modifizierten SIP INFO-Message ist ersichtlich, dass ein neues SIP-ProtokoNelement hinzugefügt wurde um diese Art der Information zu übertragen. In diesem Beispiel gibt es als Erweiterung des SIP Protokolls ein "Motion-Header-Field", welches die relativen Änderungen in der jeweiligen Richtung, also in der X-, Y-, Z-Richtung, beinhalten sowie das Zeitintervall innerhalb dessen diese Änderungen aufgetreten sind. In der Informationstechnik werden Metadaten am Anfang einer Datei oder eines Datenblocks als "Header" (auch: Dateikopf) bezeichnet. Diese können verwendet werden, um das Dateiformat zu beschreiben oder weitere Angaben beispielsweise zum Ursprung der Daten zu machen.

Denkbar ist auch, die Beschleunigungswerte anstatt der Bewegungswerte, d. h., der relativen Abweichung von der letzten Position zu ermitteln und zu übertragen. Weiterhin befindet sich in diesem neuen Header-Field ein optionaler Kontext-Parameter, welcher vom Sender der SIP-Message mit bestimmten Kontext-Werten belegt werden kann. Beispielsweise reicht es für bestimmte Anwendungsfälle, wenn der Kontext "move_left" übermittelt wird, um eine bestimmte Aktion im SIP-Server auszulösen.

Somit wird zum einen der SIP-Server nicht damit belastet, die X-,Y-, Z-Werte und Time zu berechnen und eine mögliche Aktion zu bestimmen, sondern dieser Server kann einfach den Kontext-Wert übernehmen. Zum anderen kann dieser Kontext-Wert "client-seitig", d.h. auf der Seite des oder eines sogenannten Clients so berechnet werden, dass dieser den speziellen Fähigkeiten des Teilnehmers entspricht. Beispielsweise kann ein behinderter Teilnehmer unter Umständen nicht die gleichen Bewegungen ausführen, wie ein gesunder Teilnehmer. Ist der Client auf der Seite dieses Teilnehmers aber so ausgestaltet, dass er die speziellen eingeschränkten Bewegungen dieses Teilnehmers auswerten und dem richtigen Kontext zuordnen kann, dann kann dieser Client die Message, d.h. die Nachricht, mit den passenden Kontext-Parametern versehen.

Diese SIP INFO-Message wird nun an den SIP-Server gesendet, der daraufhin geeignete Aktionen initiieren kann. Beispielsweise können Informationen wie Nicken, Verneinen, Blickrichtungen, detektiert werden und bestimmte Informationen auf einem Bildschirm dargestellt werden.

Eine weitere Variante ist die Übertragung dieser Informationen in RTP-Datenstrom über sog. Events. In diesem Fall werden die Bewegungsinformationen von Endgerät zu Endgerät, also von SIP-Phone zu SIP-Phone übertragen. Für diesen Anwendungsfall werden neue sogenannte "named-events" definiert, die "end-toend" zum anderen Endgerät (SIP-device) übertragen werden. Dieses andere SIP-Device kann beispielsweise ein Voice-Menü-System sein, welches bei einem Nicken, Verneinen bestimmte Aktionen auslöst.

Die vorliegende Erfindung schlägt also ein Verfahren vor, dass bei Verwendung eines Gerätes, welches Bewegungsinformationen aufnimmt und das Informationen einem SIP-Phone zur Verfügung stellt, diese Informationen innerhalb des SIP-Protokolls mittels eines neuen SIP-Header-Fields oder auch innerhalb des RTP-Protokolls als Events übertragen werden. Ein solches Gerät könnte beispielsweise ein Headset sein, welches Bewegungssensoren beinhaltet oder es könnte auch eine Art Joystick sein.

Ein Headset (dt. Sprechgarnitur) ist eine Kombination aus Kopfhörer und Mikrofon, die ein zweiseitiges Kommunizieren (Hören und Sprechen) ermöglicht. Im deutschen Sprachraum hat sich die englische Bezeichnung "Headset" durchgesetzt.

SIP-Telefone ("SIP-Phones") sind ein Typ von Telefonen, die auf Voice-over-IP basieren und dazu das Session Initiation Protocol (SIP) nutzen. Das Gespräch wird dabei in einzelnen Datenpaketen über das Internet versendet. SIP-Telefone können als Einzelgerät (Hardphone), Telefonadapter plus klassisches Telefon oder als Softwarelösung auf einem PC oder PDA (Softphone) realisiert sein. Es existieren sowohl leitungsgebundene (meist Ethernet) als auch schnurlose (meist WLAN) Varianten.

Diese Informationen (beispielsweise über X-Richtung, Y-Richtung, Z-Richtung) werden von dem Headset auf das SIP-Phone übertragen und dort werden diese in das SIP-Protokoll eingebracht. Hierzu kann das SIP-Protokoll folgendermaßen erweitert werden:
INFO sip:sipserver.de:5060 SIP/2.0
Max-Forwards: 70
Content-Length: 0
Via: SIP/2.0/UDP 192.168.1.100:5060; branch=z9hG4bKd9ef3b8fa
Call-ID: 675c30257bcc371
From: sip:1000@192.168.1.100;tag=5c2ff2291b64b21
To: sip:2000@192.168.1.88
CSeq: 17 INFO
Motion: x=1;y=44;z=34;time=10;context=move_left

Bei einer bevorzugten Ausführungsform der Erfindung ist vorgesehen, dass zwischen Sender und Empfänger die Kommunikationsmodalitäten mit Hilfe eines Protokolls vereinbart werden, welches die Übertragung der Bewegungsinformationen über ein spezielles, hierfür vorgesehenes Datenformat ermöglicht. Ein solches Protokoll zur Vereinbarung von Kommunikationsmodalitäten ist beispielsweise das Session-Initiation-Protocol SIP, welches für die Zwecke der vorliegenden Erfindung in geeigneter Weise erweitert werden kann, wie dies beispielsweise in dem oben ausgeführten Ausführungsbeispiel geschehen ist. Hierbei kann das Datenformat vorzugsweise die Übertragung von räumlichen Koordinaten, Zeitangaben und Kontext-Daten vorsehen. Bei einem bevorzugten Ausführungsbeispiel der Erfindung ist vorgesehen, dass die Bewegungsinformation mit Hilfe eines hierfür geeigneten Protokolls, beispielsweise mit Hilfe des Real Time Transport Protokolls RTP übertragen werden.

## Patentansprüche

1. Verfahren zur Aufnahme und Übertragung von Bewegungsinformation von einem Sender an einen Empfänger mit folgenden Schritten:
a) Bewegungsinformation (s1) wird aufgenommen, indem ein Aufnahmegerät (102, 202) auf der Seite des Senders (103, 203) die Bewegung eines Objekts (106, 206) mit Hilfe mindestens eines Sensors (101, 201) registriert und in ein digitales Signal (i2) umwandelt, das dem Sender (103, 203) zugeführt wird;
b) der Sender übermittelt Kontext-Daten zusammen mit den Daten des digitalen Signals (i2) oder anstelle der Daten des digitalen Signals (i2) an einen Empfänger (104, 204);
c) der Empfänger löst in Abhängigkeit von den ihm übermittelten Daten wenigstens eine Aktion aus,
**dadurch gekennzeichnet, dass** die Daten des digitalen Signals (i2) aus Videosequenzen abgeleitete oder extrahierte Merkmale umfassen.

2. Verfahren nach Anspruch 1, bei dem die übermittelten Daten den Empfänger in die Lage versetzen, der aufgenommenen Bewegungsinformation entsprechende Benutzerinformationen (s2) auszugeben.

3. Verfahren nach Anspruch 2, bei dem die Benutzerinformationen auf optische akustische Weise ausgegeben werden.

4. Verfahren nach einem der vorhergehenden Ansprüche, bei dem die Bewegungsinformation über ein Netzwerk auf der Grundlage der Paketvermittlung übertragen wird.

5. Verfahren nach Anspruch 4, bei dem die Kommunikationsmodalitäten zwischen Sender und Empfänger mit Hilfe eines Protokolls vereinbart werden, welches die Übertragung der Bewegungsinformation über ein spezielles hierfür vorgesehenes Datenformat ermöglicht.

6. Verfahren nach Anspruch 5, bei dem das spezielle Datenformat die Übertragung von räumlichen Koordinaten, Zeitangaben und Kontext-Daten vorsieht.

7. Verfahren nach einem der vorhergehenden Ansprüche, bei dem die Kommunikationsmodalitäten mit Hilfe des sogenannten "Session Initiation Protocol" vereinbart und die Bewegungsinformation mit Hilfe des sogenannten Real Time Transport Protocol" übertragen werden.

8. Verfahren nach einem der vorhergehenden Ansprüche, bei dem die Daten des digitalen Signals (i2) aus Videosequenzen abgeleitete oder extrahierte Merkmale umfassen, und zwar Bewegungsvektoren oder Ortskoordinaten, Geschwindigkeiten oder Beschleunigungen von bewegten Objekten, vorzugsweise mit zugehörigen Zeitangaben.

9. Verfahren nach einem der vorhergehenden Ansprüche, bei dem die Kontext-Daten eine textuelle Beschreibung eines Bewegungsablaufs oder seiner Bedeutung in einem Kontext umfassen.

10. Verfahren nach einem der vorhergehenden Ansprüche, bei dem die Daten vom Sender zum Empfänger in einem RTP-Datenstrom über Events von Endgerät zu Endgerät übertragen werden.

11. Verfahren nach einem der vorhergehenden Ansprüche, bei dem das Aufnahmegerät eine Sprechgarnitur ist, welche Bewegungssensoren, vorzugsweise zur Registrierung von Bewegungen des Trägers der Sprechgarnitur aufweist.

12. Verfahren nach einem der vorhergehenden Ansprüche, bei dem das Aufnahmegerät ein Joy-Stick ist.

13. Verfahren nach einem der vorhergehenden Ansprüche, bei dem der Sender und/oder der Empfänger als SIP-Telefon ausgestaltet sind.

14. Verfahren nach einem der vorhergehenden Ansprüche, bei dem der Sender und/oder der Empfänger als Computer oder PDA ausgestaltet und mit einer Software ausgestattet sind, welche eine Voice-over-IP-Funktion auf diesen Geräten ausführt.

## Claims

1. Method for recording and transmitting motion data from a transmitter to a receiver, comprising the following steps:
a) motion data (s1) is recorded by a recording device (102, 202) at the transmitter end (103, 203), said recording device registering the motion of an object (106, 206) by means of at least one sensor (101, 201) and converting the registered motion into a digital signal (i2) which is fed to the transmitter (103, 203);
b) the transmitter transmits context data together with the data of the digital signal (i2) or instead of the data of the digital signal (i2) to a receiver (104, 204);
c) the receiver triggers at least one action depending on the data transmitted to it,
**characterised in that** the data of the digital signal (i2) comprises features derived or extracted from video sequences.

2. Method according to claim 1, in which the transmitted data enables the receiver to output user data (s2) that corresponds to the captured motion data.

3. Method according to claim 2, in which the user data is output opto-acoustically.

4. Method according to any one of the preceding claims, in which the motion data is transmitted over a network on the basis of packet switching.

5. Method according to claim 4, in which the communication modalities between transmitter and receiver are agreed by means of a protocol which enables the transmission of the motion data via a special data format provided for this.

6. Method according to claim 5, in which the special data format provides for the transmission of spatial coordinates, time information and context data.

7. Method according to any one of the preceding claims, in which the communication modalities are agreed by means of the so-called "Session Initiation Protocol" and the motion data is transmitted by means of the so-called "Real Time Transport Protocol".

8. Method according to any one of the preceding claims, in which the data of the digital signal (i2) comprises features derived or extracted from video sequences, namely motion vectors or location coordinates, speeds or accelerations of moving objects, preferably with associated time information.

9. Method according to any one of the preceding claims, in which the context data comprises a textual description of a motion sequence or its meaning in a context.

10. Method according to any one of the preceding claims, in which the data is transmitted from the transmitter to the receiver in an RTP data stream via events from terminal to terminal.

11. Method according to any one of the preceding claims, in which the recording device is a headset which has motion sensors, preferably for registering motions of the carrier of the headset.

12. Method according to any one of the preceding claims, in which the recording device is a joystick.

13. Method according to any one of the preceding claims, in which the transmitter and/or the receiver are designed as an SIP telephone.

14. Method according to any one of the preceding claims, in which the transmitter and/or the receiver are designed as a computer or PDA and equipped with software which runs a voice-over-IP function on these devices.

## Revendications

1. Procédé servant à enregistrer et à transmettre une information de mouvement d'un émetteur à un récepteur, comprenant les étapes suivantes :
a) l'information de mouvement (s1) est enregistrée en ce qu'un appareil d'enregistrement (102, 202) enregistre du côté de l'émetteur (103, 203) le mouvement d'un objet (106, 206) à l'aide d'au moins un capteur (101, 201) et le convertit en un signal numérique (i2) qui est acheminé à l'émetteur (103, 203) ;
b) l'émetteur transmet au récepteur (104, 204) les données contextuelles en plus des données du signal numérique (i2) ou à la place des données du signal numérique (i2) ;
c) le récepteur déclenche en fonction des données qui lui ont été transmises au moins une action,
**caractérisé en ce que** les données du signal numérique (i2) comportent des caractéristiques déduites et extraites de séquences vidéo.

2. Procédé selon la revendication 1, dans le cadre duquel les données transmises mettent le récepteur en position de délivrer des informations relatives à l'utilisateur (s2) correspondant à l'information de mouvement enregistrée.

3. Procédé selon la revendication 2, dans le cadre duquel les informations relatives à l'utilisateur sont émises d'une manière optique et acoustique.

4. Procédé selon l'une quelconque des revendications précédentes, dans le cadre duquel l'information de mouvement est transférée par l'intermédiaire d'un réseau sur la base d'une commutation de paquets.

5. Procédé selon la revendication 4, dans le cadre duquel les modalités de communication entre l'émetteur et le récepteur sont convenues à l'aide d'un protocole, qui permet le transfert de l'information de mouvement par l'intermédiaire d'un format de données prévu spécialement à cet effet.

6. Procédé selon la revendication 5, dans le cadre duquel le format de données spécial prévoit le transfert de coordonnées spatiales, d'indications temporelles et de données contextuelles.

7. Procédé selon l'une quelconque des revendications précédentes, dans le cadre duquel les modalités de communication sont convenues à l'aide d'un protocole qu'on appelle SIP « Session Initiation Protocol » et où les informations de mouvement sont transférées à l'aide du protocole qu'on appelle RTP « Real-Time Transport Protocol ».

8. Procédé selon l'une quelconque des revendications précédentes, dans le cadre duquel les données du signal numérique (i2) comportent des caractéristiques déduites ou extraites de séquences vidéo, à savoir des vecteurs de mouvement ou des coordonnées spatiales, des vitesses ou des accélérations d'objets déplacés, de préférence avec des indications temporelles associées.

9. Procédé selon l'une quelconque des revendications précédentes, dans le cadre duquel les données contextuelles comportent une description textuelle d'une série de mouvements ou de la signification de cette dernière dans un contexte.

10. Procédé selon l'une quelconque des revendications précédentes, dans le cadre duquel les données sont transférées de l'émetteur vers le récepteur dans un flux de données RTP par l'intermédiaire d'événements de terminal à terminal.

11. Procédé selon l'une quelconque des revendications précédentes, dans le cadre duquel l'appareil d'enregistrement est une garniture de conversation, qui présente des capteurs de mouvement, de préférence destinés à enregistrer des mouvements du porteur de la garniture de conversation.

12. Procédé selon l'une quelconque des revendications précédentes, dans le cadre duquel l'appareil d'enregistrement est un joystick.

13. Procédé selon l'une quelconque des revendications précédentes, dans le cadre duquel l'émetteur et/ou le récepteur sont configurés comme des téléphones SIP.

14. Procédé selon l'une quelconque des revendications précédentes, dans le cadre duquel l'émetteur et/ou le récepteur sont configurés comme des ordinateurs ou des PDA (assistants numériques personnels) et sont équipés de logiciels, qui exécutent sur ces appareils une VoIP (Voice-over-IP - protocole voix sur IP).
